# EUROPÄISCHE PATENTSCHRIFT

(11) **EP 1 038 102 B1**
(45) Veröffentlichungstag und Bekanntmachung des Hinweises auf die Patenterteilung: **11.09.2002**
(21) Anmeldenummer: 98958857.9
(22) Anmeldetag: 21.10.1998
(51) Int. Cl.: F03C 1/04, F16D 59/02, F16D 55/40, F16D 55/02

(54) **RADIALKOLBENMOTOR MIT REIBSCHLUSSBREMSE**
RADIAL PISTON MOTOR WITH FRICTION BRAKE
MOTEUR A PISTONS RADIAUX AVEC FREIN A FRICTION

(30) Priorität: 11.12.1997 DE 19755156
(43) Veröffentlichungstag der Anmeldung: 27.09.2000
(73) Patentinhaber: Mannesmann Rexroth Aktiengesellschaft, 97816 Lohr am Main (DE)
(72) Erfinder: CUNNINGHAM, Sinclair, Kinghorn, Fife (GB); WÜSTHOF, Peter, D-97816 Lohr am Main (DE)
(74) Vertreter: Winter, Konrad Theodor, Dipl.-Ing.
(86) Internationale Anmeldenummer: EP9806679
(87) Internationale Veröffentlichungsnummer: WO99030030

(56) Entgegenhaltungen:
- WO-A-94/18451
- DE-A- 2 625 327
- GB-A- 2 231 370
- GB-A- 2 261 710

## Beschreibung

Die vorliegende Erfindung bezieht sich auf Antriebseinrichtungen mit einem Hydromotor und einer kombinierten Reibschlußbremse und findet Verwendung für Werkzeugmaschinen, mobile Arbeitsgeräte und dgl.. Die vorliegende Erfindung bezieht sich insbesondere auf eine mit einem Radialkolbenmotor nach dem Mehrhubprinzip und einer Lamellenbremse ausgestattete Antriebseinrichtung.

Hydromotoren im Sinn der vorliegenden Erfindung bestehen im wesentlichen aus einem Rotor und einem Stator, einer Lagerung des Rotors gegenüber dem Stator, einer mit dem Rotor in Verbindung stehenden Abtriebswelle sowie einer Steuerung zur Verteilung von Hydraulikfluid an Zylinderräume im Rotor. Diese Bauteile sind um eine geometrische Achse angeordnet und in dieser Achsrichtung zueinander fixiert. Radialkolbenmotoren, wofür die vorliegende Erfindung bevorzugt angewendet wird, haben ferner einen Hubring als einen Bestandteil des Stators, eine Rotorscheibe als einen Bestandteil des Rotors, in der sich die im wesentlichen radial angeordneten Zylinderräume befinden, und Kolben, die in den Zylinderräumen verschiebbar angeordnet sind und sich über Rollen am Hubring abstützen.

Reibschlußbremsen haben die Aufgabe, eine relative Verdrehung zwischen Rotor und Stator zu verhindern (Haltebremse) oder einzuschränken (Fahrbremse). Reibschlußbremsen im Sinn der vorliegenden Erfindung sind beispielsweise Lamellenbremsen mit einem Bremslamellenpaket, das abtriebsseitige Bremslamellen, die über eine Mitnehmerverzahnung drehfest am Rotor fixiert sind, und statorseitige Bremslamellen umfaßt, die über eine Mitnehmerverzahnung drehfest am Stator fixiert sind. Über die Federkraft einer Feder-Kolben-Anordnung als ein weiterer Bestandteil der Lamellenbremse wird auf das aus den abtriebsseitigen und den statorseitigen Bremslamellen bestehende Bremslamellenpaket in der Weise ein Druck aufgebracht, daß die abtriebseitigen und statorseitigen Bremslamellen aufeinander geschoben werden, was zu einer Betätigung der Lamellenbremse, d. h. zu einem Festhalten des Rotors bei Stillstand der Antriebseinrichtung oder zu einem Abbremsen des Rotors bei Betrieb der Antriebseinrichtung führt. Über einen auf die Feder-Kolben-Anordnung wirkenden, der Federkraft entgegengerichteten Fluiddruck wird das Bremslamellenpaket entlastet, so daß die Lamellenbremse gelöst wird.

Derartige Antriebseinrichtungen sind Gegenstand ständiger Entwicklung im Hinblick auf eine Reduzierung ihres sowohl radialen als auch axialen Platzbedarfs. Dabei hat abgesehen von der Gestaltung der Lagerung des Rotors, die Gestaltung und/oder Anordnung der Reibschlußbremse einen entscheidenden Einfluß auf die äußeren Abmessungen der Antriebseinrichtung sowohl in radialer als auch axialer Richtung.

Antriebseinrichtungen mit einem Hydromotor und einer Lamellenbremse gemäß den vorstehend aufgeführten Merkmalen sind beispielsweise in den Offenlegungsschriften DE-A-19504451, DE-A-4407563 und DE-A-4311997 offenbart.

Bei der Antriebseinrichtung der Offenlegungsschrift DE-A-19504451 sind die Bremslamellen der Lamellenbremse radial außerhalb eines Lagers der Lagerung für die Abtriebswelle in der Weise angeordnet, daß sie das Lager wenigstens teilweise axial überdecken. Eine derartige Anordnung der Bremslamellen erfordert zwar keine allzu große Ausdehnung der Antriebseinrichtung in Axialrichtunng, benötigt aber relativ viel Platz in Radialrichtung, um die Bremslamellen, die abtriebsseitige Mitnehmerverzahnung und die feststehende Mitnehmerverzahnung unterzubringen.

Bei der aus der Offenlegungsschrift DE-A-4407563 bekannten Antriebseinrichtung sind die Bremslamellen der Lamellenbremse axial im Anschluß an das Gehäuse des Hydromotors angeordnet; für die Anordnung der Bremslamellen und der beiden Mitnehmerverzahnungen wird daher zwar wenig Platz in Radialrichtung, daür aber viel Platz in Axialrichtung beansprucht.

Siehe hierzu auch das Dokument GB-A-2261710.

Dasselbe trifft im wesentlichen auch für die aus der Offenlegungsschrift DE-A-4311997 bekannte Antriebseinrichtung zu, so daß auf eine weitere Erläuterung dieser Antriebseinrichtung an dieser Stelle verzichtet wird.

Aufgabe der vorliegenden Erfindung ist es daher, eine Antriebseinrichtung mit einem Hydromotor und einer kombinierten Reibschlußbremse zu schaffen, die sich durch einen kompakten und einfachen Aufbau mit im Vergleich zu herkömmlichen Antriebseinrichtungen kleinen Abmessungen in axialer wie auch radialer Richtung auszeichnet.

Diese Aufgabe wird durch eine Antriebseinrichtung gemäß den Merkmalen des Patentanspruchs 1 gelöst. Gemäß der vorliegenden Erfindung ist der Bremskörper der Reibschlußbremse zumindest teilweise in einer im Rotor ausgebildeten Einfassung angeordnet. Die Anordnung des Bremskörpers in der vorstehend beschriebenen Weise führt daher weder zu einer axialen noch zu einer radialen Ausdehung der Antriebseinrichtung insgesamt. Des weiteren wird durch eine derartige Anordnung des Bremskörpers eine Antriebseinrichtung mit einem kompakten und einfach gestalteten Aufbau erzielt.

Als Reibschlußbremse kommt beispielsweise eine herkömmliche Lamellenbremse mit einem Bremslamellenpaket als Bremskörper in Betracht. Bei entsprechender Gestaltung der Einfassung sind aber auch Reibschlußbremsen mit einem scheibenförmigen Bremskörper (Scheibenbremse) oder Reibschlußbremsen mit einem trommelförmigen Bremskörper (Trommelbremse) denkbar. Vorstellbar ist im Grunde genommen jede Bremse mit einem Bremskörper, der zumindest teilweise in einer Einfassung im Rotor angeordnet werden und eine relative Verdrehung zwischen Rotor und Stator verhindern oder einschränken kann.

Der Bremskörper kann eine beliebige Form aufweisen. Hinsichtlich der Anordnung des Bremskörpers bestehen folgende Möglichkeiten: Der Bremskörper kann "schwimmend" in der Einfassung angeordnet und mit zwei Reibflächen versehen sein, die mit entsprechenden rotorseitigen und statorseitigen Reibflächen kraftschlüssig in Verbindung gebracht werden können. Es ist aber auch möglich, daß der Bremskörper eine Reibfläche aufweist und entweder mit dem Stator oder dem Rotor formschlüssig in Verbindung steht, wobei die Reibfläche des Bremskörpers dann mit einer entsprechenden Reibfläche am Rotor oder Stator kraftschlüssig in Verbindung gebracht werden kann.

Weitere vorteilhafte Merkmale der erfindungsgemäßen Antriebseinrichtung sind Gegenstand der Unteransprüche.

Im Hinblick auf eine einfache und kostengünstige Variante einer erfindungsgemäßen Antriebseinrichtung wird für die Anordnung des Bremskörpers eine bereits vorhandene axiale Aussparung im Rotor, insbesondere die axiale Aussparung für die Abtriebswelle, als Einfassung verwendet. Da eine derartige Anordnung des Bremskörpers keinen Einfluß auf die anderen in der Antriebseinrichtung vorgesehenen Bauteile hat, kann in diesem Fall auf Bauteile herkömmlicher Antriebseinrichtungen zurückgegriffen werden. Dies ist natürlich auch dann möglich, wenn der Bremskörper nicht in der bereits vorhandenen axialen Aussparung angeordnet ist, sondern in einer eigens für den Bremskörper ausgebildeten Einfassung im Rotor, und trägt wesentlich zu einer Reduzierung der Kosten für die Antriebseinrichtung bei.

Der Bremskörper der Reibschlußbremse ist vorzugsweise zwischen dem Rotor und einem bezüglich des Stators drehfest, aber axial verschiebbar gehaltenen Schaft angeordnet. Der Schaft erstreckt sich zum Rotor und trägt den Bremskörper.

Die Antriebseinrichtung kann ferner eine Feder-Kolben-Anordnung, wie sie auch bei herkömmlichen Antriebseinrichtungen verwendet wird, zur Betätigung der Reibschlußbremse aufweisen. Derartige Feder-Kolben-Anordnungen sind gewöhnlich in einem am Stator befestigten Bremsgehäuse untergebracht. Der Kolben der Feder-Kolben-Anordnung steht mit dem Schaft in Verbindung und bildet im Gehäuse zwei Kammern aus. In einer der beiden Kammer befindet sich eine Feder, die auf den Kolben einen Druck in eine erste Richtung, beispielsweise in Bremsbetätigungsrichtung, ausübt. Die andere Kammer kann mit Druckfluid befüllt werden, durch welchen auf den Kolben ein Druck in eine zweite Richtung, beispielsweise in Bremslöserichtung, aufgebracht werden kann. Natürlich wäre es auch möglich, die Bremse über das Druckfluid zu betätigen und über die Federkraft der Feder zu lösen.

Wie vorstehend bereits erwähnt, kann als Reibschlußbremse eine Lamellenbremse verwendet werden, die ein Bremslamellenpaket mit zumindest einer abtriebsseitigen und einer statorseitigen Bremslamelle aufweist. In diesem Fall ist vorteilhafterweise in der Einfassung im Rotor eine Mitnehmerverzahnung für die zumindest eine abtriebsseitige Bremslamelle und am Schaft eine Mitnehmerverzahnung für die zumindest eine feststehende Bremslamelle ausgebildet. Wenn als Einfassung die Aussparung für die Abtriebswelle dient, kann natürlich die bereits vorhandene Innenverzahnung als Mitnehmerverzahnung für die zumindest eine abtriebsseitige Bremslamelle verwendet werden. Es wäre natürlich auch denkbar, die Mitnehmerverzahnung nicht unmittelbar in der Einfassung des Rotors bzw. am Schaft auszubilden, sondern über weitere Einrichtungen, die mit dem Rotor bzw. dem Schaft drehfest verbunden sind.

Wenn die Mitnehmerverzahnung am Schaft ausgebildet ist, kann sich die auf der Mitnehmerverzahnung des Schafts sitzende zumindest eine Bremslamelle entweder unmittelbar am Schaft oder an einer auf dem Schaft angeordneten Hülse abstützen.

Ein Bremskörper im Sinn der vorliegenden Erfindung ist jedoch auch ein einstückig mit dem Rotor ausgebildeter Bremskörper, der eine Reibfläche aufweist, die mit einer entsprechenden statorseitigen Reibfläche kraftschlüssig in Verbindung gebracht werden kann. Beispielsweise kann ein die Oberfläche der Rotorscheibe einschließender Oberflächenschichtbereich, der an der Oberfläche als Reibfläche ausgeführt ist, die mit einer entsprechenden statorseitigen Reibfläche in kraftschlüssige Verbindung gebracht werden kann, als Bremskörper angesehen werden. Der Oberflächenschichtbereich kann beispielsweise ein beschichteter oder gehärteter Bereich der Rotorscheibenoberfläche mit einer bestimmten Tiefe sein. Das diesen Bereich umgebende Material der Rotorscheibe entspricht dann der Einfassung für den als Bremskörper betrachteten Bereich der Rotorscheibe.

Weitere Merkmale der vorliegenden Erfindung gehen aus der nachfolgenden Beschreibung eines bevorzugten Ausführungsbeispiels unter Bezugnahme auf die Zeichnung hervor. Es zeigt:
Fig. 1 einen Längsquerschnitt durch einen Radialkolbenmotor mit kombinierter Lamellenbremse gemäß einer bevorzugten Ausführungsform der Erfindung;
Fig. 2 einen Längsquerschnitt durch einen Radialkolbenmotor mit kombinierter Lamellenbremse gemäß einer zweiten Ausführungsform der Erfindung; und
Fig. 3 einen Längsquerschnitt durch einen Radialkolbenmotor mit kombinierter Lamellenbremse gemäß einer dritten Ausführungsform der Erfindung;
Fig. 4 einen Längsquerschnitt durch einen Radialkolbenmotor mit kombinierter Lamellenbremse gemäß einer vierten Ausführungsform der Erfindung;
Fig. 5 einen Längsquerschnitt durch einen Radialkolbenmotor mit kombinierter Lamellenbremse gemäß einer fünften Ausführungsform der Erfindung; und
Fig. 6 einen Längsquerschnitt durch einen Radialkolbenmotor mit kombinierter Lamellenbremse gemäß einer sechsten Ausführungsform der Erfindung.

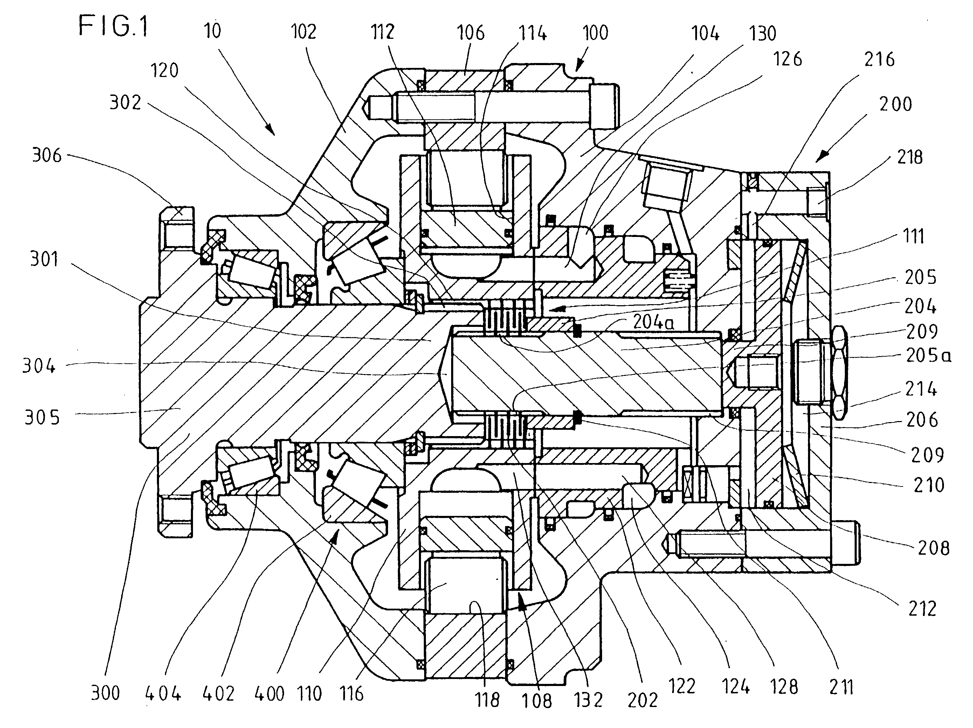

Nachstehend erfolgt unter Bezugnahme auf Fig. 1 die Beschreibung der bevorzugten Ausführungsform der erfindungsgemäßen Antriebseinrichtung.

Wie es in Fig. 1 zu sehen ist, weist die Antriebseinrichtung 10 einen Hydromotor 100, eine Reibschlußbremse 200, eine Abtriebswelle 300 und eine Lagerung 400 für die Abtriebswelle auf.

Der Hydromotor 100 ist in diesem Ausführungsbeispiel ein herkömmlicher Radialkolbenmotor nach dem Mehrhubprinzip. Da der Aufbau eines derartigen Hydromotors im wesentlichen bekannt ist, wird dieser im Folgenden nur kurz umrissen.

Wie es in Fig. 1 gezeigt ist, besteht der Hydromotor 100 im wesentlichen aus einem Stator sowie einem in einem Hubring 106 untergebrachten Rotor 108. Der Stator umfaßt im wesentlichen zwei Gehäuseteile 102 und 104 und den Hubring 106. Der Rotor 108 umfaßt eine Rotorscheibe 110, sternförmig nach außen gerichtete Kolben 112 sowie Rollen 116. Die Kolben 112 sind in Zylinderräumen 114, die in der Rotorscheibe 110 in Radialrichtung ausgebildet sind, angeordnet und stützen sich über die Rollen 116 auf der Kurvenbahn 118 des Hubrings 106 ab.

Mit dem Bezugszeichen 122 ist eine im Gehäuse 104 drehfest fixierte Steuerung zur Verteilung eines Druckfluids an die Zylinderräume 114 bezeichnet. Die Steuerung weist zwei fluiddicht voneinander getrennte Umfangsnuten 124 und 126 auf, die jeweils mit Fluidkanälen 128 bzw. 130 in Verbindung stehen. Im Betrieb des Hydromotors treten die Fluidkanäle 128 bzw. 130 abwechselnd mit Fluidkanälen 132 in Verbindung, die in der Rotorscheibe 110 ausgebildet sind und jeweils mit einem der Zylinderräume 114 kommunizieren.

Die Rotorscheibe 110 weist eine der Einfassung entsprechende, zentral ausgebildete, axiale Aussparung 111 mit einer Innenverzahnung 120 auf. In diese axiale Aussparung 111 ragt von der in Fig. 1 linken Seite des Rotors her ein Endabschnitt 301 der Abtriebswelle 300. Der Endabschnitt 301 der Abtriebswelle 300 weist eine Außenverzahnung 302 auf, die mit der Innenverzahnung 120 der Rotorscheibe 110 in Eingriff steht, wodurch die Abtriebswelle 300 drehfest mit der Rotorscheibe 110 verbunden ist. Der Endabschnitt 301 der Abtriebswelle 300 weist eine axiale Innenbohrung 304 auf, die sich, wie in Fig. 1 gezeigt, von der rechten Stirnseite der Abtriebswelle 300 in die Abtriebswelle 300 erstreckt.

Wie es in Fig. 1 gezeigt ist, weist die Abtriebswelle 300 am linken Endabschnitt 305 einen Wellenflansch bzw. Flanschabschnitt 306 auf, der mit Befestigungsgewinden zur Herstellung einer Verbindung zu einem nicht dargestellten Antriebselement, z. B. dem Rad eines Laders, versehen ist.

Die Abtriebswelle 300 ist über eine Lagerung 400 im Hydromotor 100 gelagert. Die Lagerung 400 besteht entsprechend herkömmlicher Antriebseinrichtungen aus zwei Kegelrollenlagern 402 und 404, die, wie in Fig. 1 gezeigt, im Gehäuseteil 102 des Hydromotors untergebracht sind und hohe Axial- und Radialkräfte übertragen können.

Die Reibschlußbremse 200 ist in diesem Ausführungsbeispiel als eine Lamellenbremse ausgeführt. Sie umfaßt ein Lamellenpaket 202 als einen Bremskörper, einen Schaft 204, ein Bremsgehäuse 206 sowie eine Feder-Kolben-Anordnung 208, 210.

Das Lamellenpaket umfaßt abtriebsseitige Bremslamellen (Außenlamellen), die über die Innenverzahnung 120 (Mitnehmerverzahnung) formschlüssig mit dem Rotor in Verbindung stehen, sowie statorseitige Bremslamellen (Innenlamellen), die über eine an einem Endabschnitt des Schafts 204 ausgebildete Außenverzahnung 204a drehfest mit dem Schaft 204 in Verbindung stehen. Jede Bremslamelle weist an ihren beiden Oberflächen je eine Reibfläche auf. Das Lamellenpaket entspricht dem Bremskörper der vorliegenden Erfindung. Gemäß dem Grundgedanken der vorliegenden Erfindung ist das Lamellenpaket in der der Einfassung entsprechenden axialen Aussparung für die Abtriebswelle 300 der Rotorscheibe 110 angeordnet und nutzt dadurch einen in der Antriebseinrichtung ohnehin vorhandenen Raum. Somit führt die Lamellenbremse weder zu einer radialen Verbreiterung der Antriebseinrichtung noch zu einer übermäßig axialen Verlängerung der Antriebseinrichtung.

Wie es in Fig. 1 zu sehen ist, sind die statorseitigen Bremslamellen des Lamellenpakets 202 über die Außenverzahnung 204a (Mitnehmerverzahnung) auf dem Schaft 204 angeordnet. Der mit der Außenverzahnung versehene Abschnitt des Schafts 204, d. h. der in Fig. 1 linke Abschnitt, ragt in die axiale Innenbohrung 304 des Abschnitts 301 der Abtriebswelle 300. Der andere Endabschnitt des Schafts 204, d. h. der rechte Endabschnitt, erstreckt sich in eine in der Stirnseite des Gehäuseteils 104 ausgebildete Öffnung und ist bezüglich des Gehäuseteils 104, d. h. des Stators, über eine entsprechende Verbindung zwischen Gehäuse und Schaft, beispielsweise eine Keilprofilverbindung, axial verschiebbar angeordnet. Auf der Seite des Abschnitts mit der Außenverzahnung 204a des Schafts 204 sitzt eine Hülse 205. Die Hülse 205 hat eine Anlagefläche 205a, an der sich die Bremslamellen des Lamellenpakets 202 abstützen. Die Hülse 205 ist durch einen Sicherrungsring 211 gegen ein Verrutschen in eine von der Rotorscheibe abgewandte Richtung, d. h. in Fig. 1 nach rechts, gesichert.

Gemäß dem vorstehend beschriebenen Aufbau ist das Lamellenpaket 202 (der Bremskörper) der Lamellenbremse 200 (der Reibschlußbremse) im allgemeinen zwischen Rotor 108 und Stator, und im besonderen zwischen der Rotorscheibe 110, der Abtriebswelle 300, dem Schaft 204 und der Hülse 205 angeordnet.

Im Bremsgehäuse 206 der Lamellenbremse 200 ist die Feder-Kolben-Anordnung 208, 210 untergebracht. Der Kolben 208 bildet im Bremsgehäuse 206 zwei Kammern 212, 214 aus, wobei die Kammer 212 fluiddicht abgedichtet ist. Ein zentral gelegener axialer Abschnitt 209 des Kolbens 208 erstreckt sich ebenfalls in die Öffnung an der Stirnseite des Gehäuseteils 104. Der zentrale Abschnitt 209 des Kolbens 208 kann an den Schaft 204 nur anstoßen oder mit diesem form- und kraftschlüssig verbunden sein. In der dem Hydromotor 100 abgewandten Kammer 214, die im übrigen auch zur Außenumgebung offen sein kann, befindet sich eine Tellerfeder 210. Durch die Federkraft der Tellerfeder 210 wird der Kolben 208 und damit der Schaft 204 in Fig. 1 nach links gedrückt, wodurch auf das Lamellenpaket, das sich in Fig. 1 nach links an der Abtriebswelle abstützt, ein Druck aufgebracht wird, wodurch die Bremslamellen aufeinander geschoben werden. Dadurch werden die Reibflächen der Bremslamellen kraftschlüssig miteinander in Kontakt gebracht, so daß ein Drehmoment übertragen werden kann. Die Lamellenbremse 200 wird also betätigt. Die Tellerfeder 210 entspricht der Feder der vorliegenden Erfindung.

Die dem Hydromotor 100 zugewandte Kammer hat die Funktion einer Fluidkammer, die über einen Anschluß 218 und einen Fluidkanal 216 mit Druckfluid befüllbar ist. Wird die Kammer 212 mit Druckfluid befüllt, wird der Kolben 208 gegen die Federkraft der Tellerfeder 210 in Fig. 1 nach rechts bewegt. Auf diese Weise wird das Lamellenpaket entlastet und die kraftschlüssige Verbindung zwischen den Bremslamellen beseitigt. Dadurch wird die Lamellenbremse 200 gelöst.

Im folgenden wird kurz auf den Betrieb der Antriebseinrichtung eingegangen. Im Betrieb der Antriebseinrichtung werden die Kolben 112 über die Fluidkanäle 124, 126, 128, 130 und 132 mittels eines Druckfluids derart angesteuert, daß die Rotorscheibe 110 zu einer Drehbewegung veranlaßt wird. Die Drehrichtung wird durch die Ansteuerungsweise gewählt. Die Kolben 112 werden hierdurch radial nach außen gedrückt und stützen sich über die Rollen 116 an der Kurvenbahn 118 des Hubrings 106 ab. Durch die formschlüssige Verbindung der Abtriebswelle 300 mit der Rotorscheibe 110 wird die Drehbewegung und das Drehmoment des Rotors 108 auf die Abtriebswelle 300 übertragen. Diese stützt sich über die Lagerungen 402 und 404 der Lagerung 400 ab. Ein Antriebselement, beispielsweise ein Rad eines hier nicht näher dargestellten Laders, das über die Befestigungsgewinde in dem Flanschabschnitt 306 mit der Abtriebswelle 300 in Verbindung steht, wird somit angetrieben und in Drehung versetzt.

Der Betrieb der Antriebseinrichtung ist natürlich nur bei gelöster Lamellenbremse 200 möglich. Wie vorstehend bereits erwähnt, erfolgt dies in der Weise, daß der Kolben 208 mit Druckfluid beaufschlagt wird, das über den Anschluß 218 und den Fluidkanal 216 in die Fluidkammer 212 gelangt. Im Fall einer Störung oder eines plötzlichen Druckabfalls im Systems wird die Antriebseinrichtung automatisch gebremst, indem der Kolben 208 durch die Federkraft der Tellerfeder 210 über den Schaft 204 und die Hülse 205 auf die Bremslamellen des Lamellenpakets drückt.

Die erfindungsgemäße Anordnung des Lamellenpakets 202 in der axialen Aussparung im Rotor schafft eine Antriebseinrichtung mit sowohl axial als auch radial minimalen Abmessungen. Im Fall der in Fig. 1 gezeigten Antriebseinrichtung kann in großem Umfang auf Standardteile herkömmlicher Antriebseinrichtungen zurückgegriffen werden, so daß der Konstruktionsaufwand und damit die Kosten für die Antriebseinrichtung minimal sind.

Das vorstehend beschriebene Ausführungsbeispiel zeigt die bevorzugte Gestaltung der erfindungsgemäßen Antriebseinrichtung. Die vorliegende Erfindung ist jedoch nicht nur auf dieses Ausführungsbeispiel beschränkt, sondern kann auch in anderer Weise ausgeführt werden.

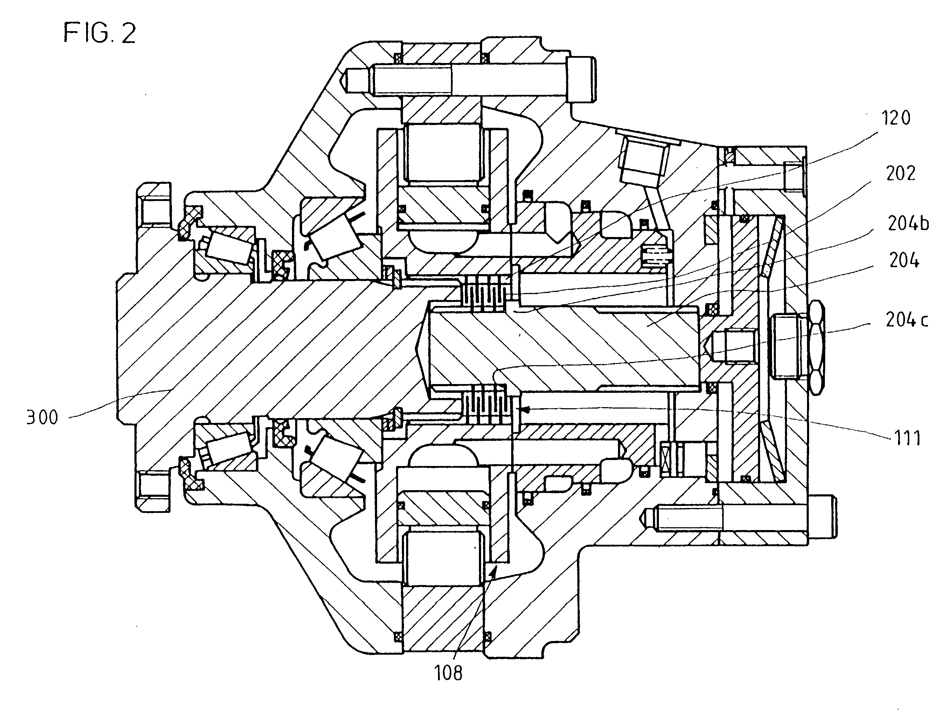

In den im folgenden beschriebenen Fig. 2 bis 6 sind weitere beispielhafte Gestaltungsmöglichkeiten der Antriebseinrichtung gezeigt, wobei vergleichbare Bauteile mit den in Fig. 1 verwendeten Bezugszeichen versehen sind. Es sei darauf hingewiesen, daß, sofern es technisch möglich ist, die in den Ausführungsbeispielen von Fig. 1 bis 6 gezeigten Merkmale untereinander kombiniert werden können.

Während im ersten Ausführungsbeispiel gemäß Fig. 1 die statorseitigen Bremslamellen an der Anlagefläche 205a der auf dem Schaft 204 sitzenden Hülse 205 abgestützt sind, ist es ebenso möglich, die Anlagefläche 204c für die Bremslamellen an einem mit Schaft einstückig ausgebildeten Ring 204b vorzusehen. Dies ist in Fig. 2 dargestellt.

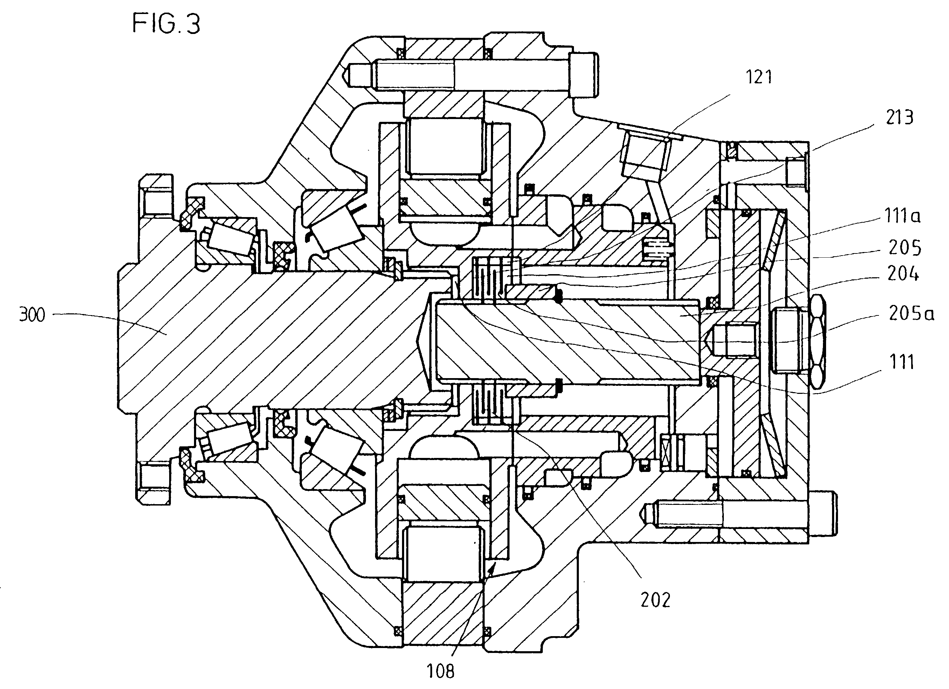

Im ersten Ausführungsbeispiel gemäß Fig. 1 wurde die in der Rotorscheibe ausgebildete axiale Aussparung für die Abtriebswelle als Einfassung für die abtriebsseitigen Bremslamellen verwendet. Wie es in Fig. 3 gezeigt ist, können die abtriebsseitigen Bremslamellen auch in einer eigens dafür ausgebildeten Aussparung 111a mit einem vom Durchmesser der axialen Aussparung 111 für die Abtriebswelle verschiedenen Durchmesser angeordnet werden. In diesem Fall weist die axiale Aussparung 111a, wie in Fig. 3 gezeigt, eine Anlage- bzw. Reibfläche 213 zur Abstützung der Bremslamellen auf.

Obwohl in den vorstehend beschriebenen Ausführungsbeispielen das Bremslamellenpaket als Bremskörper vollständig in einer axialen Aussparung des Rotors angeordnet ist, kann das Bremslamellenpaket auch so angeordnet sein, daß die an der Anlagefläche des Schafts oder der Hülse angrenzende Bremslamelle außerhalb der axialen Aussparung des Rotors liegt, sofern diese Bremslamelle eine statorseitige Bremslamelle ist.

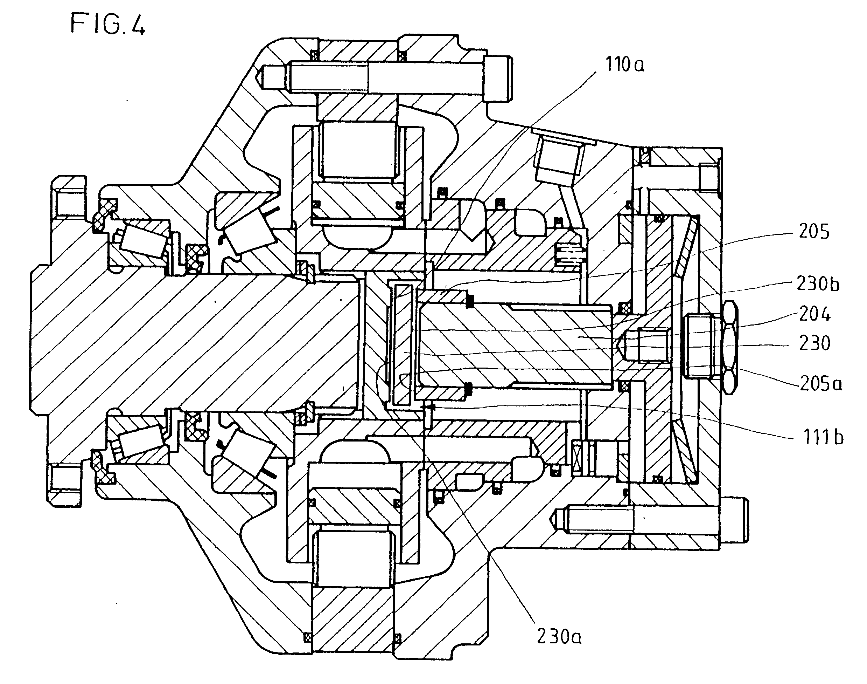

In den vorstehend beschriebenen Ausführungsbeispielen wird eine Lamellenbremse als Reibschlußbremse und eine Vielzahl von Bremslamellen als Bremskörper verwendet. Die erfindungsgemäße Antriebseinrichtung ist jedoch nicht nicht nur auf eine derartige Reibschlußbremse beschränkt. Es kann auch eine andere Reibschlußbremse mit einem (einzelnen) Bremskörper anstelle der Vielzahl von Bremslamellen verwendet werden. Der Bremskörper kann dabei die Gestalt einer Bremsscheibe aufweisen, wie es beispielsweise in Fig. 4 gezeigt ist. In diesem Fall sind die beiden Oberflächen 230a und 230b der Bremsscheibe 222 als Reibflächen ausgeführt, die mit entsprechenden Reibflächen 110a an der Rotorscheibe 110 und 205a an der Hülse 205 in kraftschlüssige Verbindung gebracht werden können. Während eine der Reibflächen hier an der Hülse 205 ausgebildet ist, kann diese Reibfläche (obwohl es in Fig. 4 nicht gezeigt ist) natürlich auch direkt am Schaft 204 vorgesehen sein.

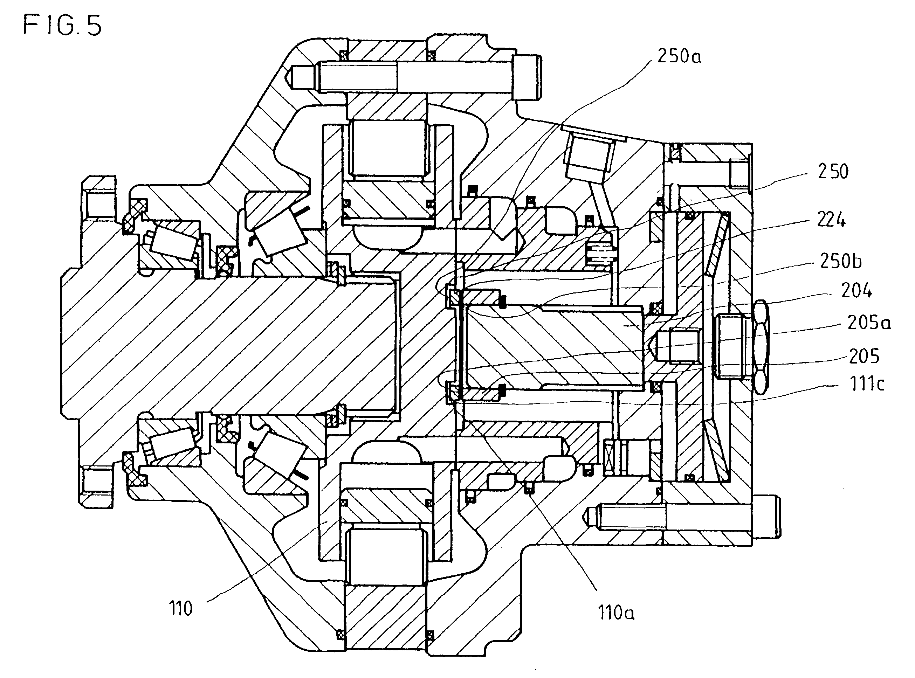

Der Bremskörper kann auch die Gestalt einer Ringscheibe 224 haben, wie es in Fig. 5 gezeigt ist. Diese Ringscheibe ist fest in einer ringförmigen Aussparung 111c der Rotorscheibe 110 angeordnet und weist an der freien Oberfläche eine Reibfläche 250b auf, die mit einer entsprechenden Reibfläche 205a an der Hülse 205 (oder auch unmittelbar am Schaft 204) und einer entsprechenden Reibfläche 110a am Rotor in Verbindung gebracht werden kann.

In jedem der vorstehend beschriebenen Fälle, ist die Reibfläche bzw. Anlagefläche, die unmittelbar am Schaft oder an einer auf dem Schaft sitzenden Hülse ausgebildet ist, an den Bremskörper angepaßt.

Wie es in Fig. 3, 4 und 5 gezeigt ist, muß die axiale Aussparung für die Abtriebswelle nicht unbedingt durch die Rotorscheibe 110 gehen. Die axiale Aussparung für die Abtriebswelle kann sich ebenso nur eine bestimmte Strecke in die Rotorscheibe erstrecken. Die Einfassung für den Bremskörper ist an der nicht von der axialen Aussparung in Anspruch genommenen freien Seite der Rotorscheibe ausgebildet, so daß die Einfassung nicht auf eine bestimmte Gestalt oder Größe beschränkt ist, sondern - natürlich unter Berücksichtigung der für die Festigkeit erforderlichen Materialstärken und der Anordnung der weiteren Bauteile in der Antriebseinrichtung - den jeweiligen Anforderungen, beispielsweise zur Erzeugung eines bestimmten Bremsmoments, entsprechend angepaßt werden kann.

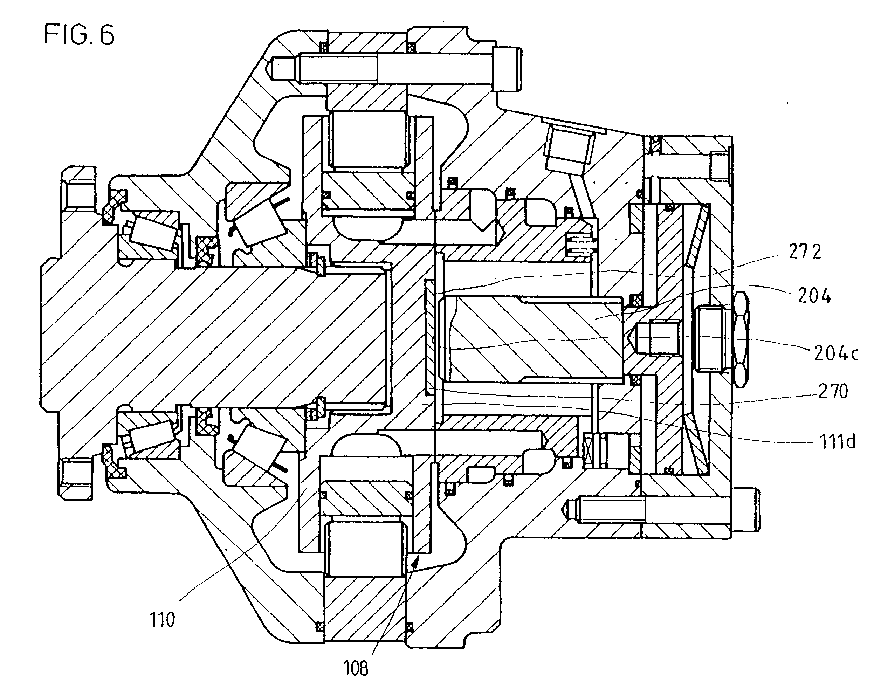

Fig. 6 zeigt eine weitere Ausführungsform der vorliegenden Erfindung, wobei der Bremskörper als ein die Oberfläche der Stirnwand der Rotorscheibe 110 einschließender Bereich 270 ausgeführt ist. In diesem Fall ist der Bremskörper 270 also einstückig mit der Rotorscheibe 110 ausgebildet. Der Schaft 204 (oder, obwohl nicht gezeigt, eine auf dem Schaft sitzende Hülse) weist dann natürlich eine entsprechende Reibfläche 204c auf. Das den Bereich 270 umgebende Material der Rotorscheibe 110 dient als Einfassung llld für den als Bremskörper fungierenden Bereich 270.

Obwohl die vorliegende Erfindung nur im Zusammenhang mit Radialkolbenmotoren beschrieben wurde, sei an dieser Stelle ausdrücklich darauf hingewiesen, daß die vorliegende Erfindung auch im Zusammenhang mit anderen Hydromotoren, beispielsweise Axialkolbenmotoren, angewendet werden kann.

Die vorliegende Erfindung schafft somit eine Antriebseinrichtung 10 mit geringen Ausdehnungen in axialer wie auch radialer Richtung. Dies wird dadurch erreicht, daß der Bremskörper 202 einer in der Antriebseinrichtung vorgesehenen Reibschlußbremse 200 zumindest teilweise in einer im Rotor 108 ausgebildeten Einfassung 111 angeordnet ist.

## Patentansprüche

1. Antriebseinrichtung (10) mit einem Hydromotor (100), insbesondere mit einem hydraulischen Radialkolbenmotor, der einen Stator (102, 104, 106), einen Rotor (108), eine Lagerung (400) des Rotors gegenüber dem Stator und eine mit dem Rotor drehfest in Verbindung stehende Abtriebswelle (300) aufweist, sowie einer zwischen Rotor und Stator geschalteten Reibschlußbremse (200), die einen Bremskörper (202, 230, 270, 350) aufweist, **dadurch gekennzeichnet,**
**daß** der Bremskörper zumindest teilweise in einer im Rotor ausgebildeten Einfassung (111, 111a, 111b, 111c, llld) angeordnet ist.

2. Antriebseinrichtung nach Anspruch 1, **dadurch gekennzeichnet, daß** die Einfassung (111, 111a, 111b, 111c) eine axiale Aussparung im Rotor (108) ist.

3. Antriebseinrichtung nach Anspruch 2, **dadurch gekennzeichnet, daß** die Einfassung eine sich durch den Rotor (108) erstreckende Aussparung für die Abtriebswelle (300) ist.

4. Antriebseinrichtung nach einem der vorhergehenden Ansprüche, **dadurch gekennzeichnet, daß** die Reibschlußbremse (200) des weiteren einen bezüglich des Stators axial verschiebbar angeordneten Schaft (204) aufweist, der sich in der Weise zum Rotor (108) erstreckt, daß der Bremskörper zwischen Rotor und Schaft angeordnet ist.

5. Antriebseinrichtung nach Anspruch 4 **dadurch gekennzeichnet, daß** die Reibschlußbremse des weiteren eine mit dem Schaft in Verbindung stehende Feder-Kolben-Anordnung (208, 210) aufweist, die auf den Schaft (204) einen Druck in eine erste Richtung ausübt.

6. Antriebseinrichtung nach Anspruch 5, **dadurch gekennzeichnet, daß** die Reibschlußbremse des weiteren ein am Stator des Hydromotors befestigtes Bremsgehäuse (206) aufweist, in dem die Feder-Kolben-Anordnung (208, 210) untergebracht ist, wobei der Kolben (208) der Feder-Kolben-Anordnung mit dem Bremsgehäuse (206) eine fluiddichte Kammer (212) ausbildet, die mit Hydraulikdruckfluid befüllt werden kann, welches auf die Feder-Kolben-Anordnung (208, 210) ein Druck in eine der ersten Richtung entgegengesetzte zweite Richtung ausübt.

7. Antriebseinrichtung nach Anspruch 6, **dadurch gekennzeichnet, daß** die erste Richtung einer Bremsbetätigungsrichtung und die zweite Richtung einer Bremslöserichtung entspricht.

8. Antriebseinrichtung nach einem der vorhergehenden Ansprüche, **dadurch gekennzeichnet, daß** der Bremskörper der Reibschlußbremse drehfest mit dem Rotor (108) verbunden ist und eine Reibfläche aufweist, die mit einer entsprechenden statorseitigen Reibfläche kraftschlüssig in Verbindung gebracht werden kann.

9. Antriebseinrichtung nach einem der vorhergehenden Ansprüche 1 bis 7, **dadurch gekennzeichnet, daß** der Bremskörper der Reibschlußbremse drehfest mit dem Schaft verbunden ist und eine Reibfläche aufweist, die mit einer entsprechenden rotorseitigen Reibfläche kraftschlüssig in Verbindung gebracht werden kann.

10. Antriebseinrichtung nach einem der Ansprüche 1 bis 7, **dadurch gekennzeichnet, daß** der Bremskörper (230) wenigstens zwei Reibflächen (230a, 230b, 250a, 250b) aufweist, die jeweils mit entsprechenden Reibflächen (110a, 205a) am Rotor und Schaft kraftschlüssig in Verbindung gebracht werden können.

11. Antriebseinrichtung nach einem der vorhergehenden Ansprüche 1 bis 7, **dadurch gekennzeichnet, daß** die Reibschlußbremse eine Lamellenbremse ist und der Bremskörper aus einer Vielzahl von Bremslamellen (202) besteht, die zumindest teilweise in der Einfassung (111, 111a) im Rotor (108) angeordnet sind.

12. Antriebseinrichtung nach Anspruch 11, **dadurch gekennzeichnet, daß** die Vielzahl von Bremslamellen zumindest eine abtriebsseitige und zumindest eine statorseitige Bremslamelle aufweisen, **dadurch gekennzeichnet, daß** die zumindest eine abtriebsseitige Bremslamelle an einer in der Einfassung (111, 111a) des Rotors (108) ausgebildeten Mitnehmerverzahnung (120, 121) und die zumindest eine statorseitige Bremslamelle an einer am Schaft ausgebildeten Mitnehmerverzahnung (204a) angeordnet ist.

13. Antriebseinrichtung nach einem der Ansprüche 4 bis 12, **dadurch gekennzeichnet, daß** der Schaft eine axial fixierte Hülse (205) trägt, an der sich der Bremskörper statorseitig abstützt.

14. Antriebseinrichtung nach einein der Ansprüch 4 bis 12, **dadurch gekennzeichnet, daß** sich der Bremskörper statorseitig unmittelbar am Schaft (204) abstützt.

15. Antriebseinrichtung nach einem der Ansprüche 1, 4 bis 7, 13 und 14, **dadurch gekennzeichnet, daß** die Reibschlußbremse einen einstückig mit dem Rotor ausgebildeten Bremskörper (270) mit einer Reibfläche (272) aufweist, die mit einer entsprechenden statorseitigen Reibfläche (204c) kraftschlüssig in Verbindung gebracht werden kann, so daß eine Relativdrehung zwischen Rotor und Stator eingeschränkt oder verhindert wird.

## Claims

1. A drive device (10) with a hydrostatic motor (100), especially a hydraulic radial piston motor, which is provided with a stator (102, 104, 106) a rotor (108), a mount (400) for the rotor relative, to the stator, and an output shaft (300) connected to the rotor such that it cannot turn relative thereto, as well as a friction brake (200) which is connected between rotor and stator and which is provided with a brake body (202, 230, 270, 350), **characterized in that** the brake body is disposed at least partly in an enclosure (111, 111a, 111b, 111c, 111d) formed in the rotor.

2. A drive device according to claim 1, **characterized in that** the enclosure (111, 111a, 111b, 111c) is an axial recess in the rotor (108).

3. A drive device according to claim 2, **characterized in that** the enclosure is a recess, extending through the rotor (108), for the output shaft (300).

4. A drive device according to any one of the preceding claims, **characterized in that** the friction brake (200) is further provided with a shank (204) which is disposed such that it can be moved axially relative to the stator and which extends to the rotor (108) in such a way that the brake body is disposed between rotor and shank.

5. A drive device according to claim 4, **characterized in that** the friction brake is further provided with a spring-and-piston arrangement (208, 210) which is connected to the shank and which exerts on the shank (204) a pressure in a first direction.

6. A drive device according to claim 5, **characterized in that** the friction brake is further prvided with a brake casing (206) which is fastened to the stator of the hydrostatic motor and in which the spring-and-piston arrangement (208, 210) is housed, the piston (208) of the spring-and-piston arrangement forming with the brake casing (206) a fluid-tight chamber (212), which can be filled with hydraulic fluid, which exerts on the spring-and-piston arrangement (208, 210) a pressure in a second direction opposite the first direction.

7. A drive device according to claim 6, **characterized in that** the first direction corresponds to a brake actuation direction and the second direction to a brake release direction.

8. A drive device according to any one of the preceding claims, **characterized in that** the brake body of the friction brake is connected to the rotor (108) such that it cannot turn relative thereto and is provided with a friction face, which can be brought into frictional contact with a corresponding stator-side friction face.

9. A drive device according to any one of preceding claims 1 to 7, **characterized in that** the brake body of the friction brake is connected to the shank such that it cannot turn relative thereto and is provided with a friction face, which can be brought into frictional contact with a corresponding rotor-side friction face.

10. A drive device according to any one of claims 1 to 7, **characterized in that** the brake body (230) is provided with at least two friction faces (230a, 230b, 250a, 250b), each of which can be brought into frictional contact with corresponding friction faces (110a, 205a) on the rotor and the shank.

11. A drive device according to any one of preceding claims 1 to 7, **characterized in that** the friction brake is a multiple plate brake and the friction body comprises a plurality of brake plates (202), which are disposed at least partly in the enclosure (111, 111a) in the rotor (108).

12. A drive device according to claim 11, **characterized in that** the plurality of brake plates is provided with at least one output-side brake plate and at least one stator-side brake plate, **characterized in that** at least one output-side brake plate is disposed on a driver toothing (120, 121) formed in the enclosure (111, 111a) of the rotor (108) and the at least one stator-side brake plate is disposed on a driver toothing (204a) formed on the shank.

13. A drive device according to any one of claims 4 to 12, **characterized in that** the shank supports an axially fixed bush (205), against which the stator side of the brake body is braced.

14. A drive device according to any one of claims 4 to 12, **characterized in that** the stator side of the brake body is braced directly against the shank (204).

15. A drive device according to any one of claims 1, 4 to 7, 13 and 14, **characterized in that** the friction brake is provided with a brake body (270) which is formed in one piece with the rotor and which has a friction face (272), which can be brought into frictional contact with a corresponding stator-side friction face (204c), so that relative rotation between rotor and stator is limited or prevented.

## Revendications

1. Système d'entraînement (10) équipé d'un moteur hydraulique (100), en particulier d'un moteur hydraulique à pistons radiaux, qui présente un stator (102, 104, 106), un rotor (108), une suspension (400) du rotor en face du stator et un arbre de sortie (300) relié de façon fixe au rotor, ainsi que d'un frein à friction (200) monté entre le rotor et le stator, qui présente un corps de frein (202, 230, 270, 350), **caractérisé**
**en ce que** le corps de frein est disposé au moins en partie dans une bordure (111, 111a, 111b, 111c, 111d) conçue dans le rotor.

2. Système d'entraînement selon la revendication 1, **caractérisé en ce que** la bordure (111, 111a, 111b, 111c) est un évidement axial dans le rotor (108).

3. Système d'entraînement selon la revendication 2, **caractérisé en ce que** la bordure est un évidement s'étendant à travers le rotor (108) pour l'arbre d'entraînement (300).

4. Système d'entraînement selon l'une quelconque des revendications précédentes, **caractérisé en ce que** le frein à friction (200) présente également une tige (204) disposée de façon à pouvoir coulisser dans le sens axial par rapport au stator, qui s'étend par rapport au rotor (108) de façon que le corps de frein soit disposé entre le rotor et la tige.

5. Système d'entraînement selon la revendication 4, **caractérisé en ce que** le frein à friction présente également un dispositif ressort-piston (208, 210) en liaison avec la tige, qui exerce sur la tige (204) une pression dans une première direction.

6. Système d'entraînement selon la revendication 5, **caractérisé en ce que** le frein à friction présente également un boîtier de frein (206) fixé sur le stator du moteur hydraulique, dans lequel est logé le dispositif ressort-piston (208, 210), le piston (208) du dispositif ressort-piston formant avec le boîtier de frein (206) une chambre (212) étanche au fluide, qui peut être remplie de fluide de pression hydraulique, lequel exerce sur le dispositif ressort-piston (208, 210) une pression dans une deuxième direction opposée à la première direction.

7. Système d'entraînement selon la revendication 6, **caractérisé en ce que** la première direction correspond à une direction de commande de frein et la deuxième direction à une direction de desserrage du frein.

8. Système d'entraînement selon l'une quelconque des revendications précédentes, **caractérisé en ce que** le corps de frein du frein à friction est relié solidaire en rotation au rotor (108) et présente une surface de frottement, qui peut être mise en liaison par adhérence avec une surface de frottement appropriée côté stator.

9. Système d'entraînement selon l'une quelconque des revendications précédentes 1 à 7, **caractérisé en ce que** le corps de frein du frein à friction est relié solidaire en rotation avec la tige et présente une surface de frottement qui peut être mise en liaison par adhérence avec une surface de frottement appropriée côté rotor.

10. Système d'entraînement selon l'une quelconque des revendications 1 à 7, **caractérisé en ce que** le corps de frein (230) présente deux surfaces de frottement (230a, 230c, 250a, 250b), qui peuvent être mises en liaison par adhérence respectivement avec des surfaces de frottement (110a, 205a) appropriées sur le rotor et la tige.

11. Système d'entraînement selon l'une quelconque des revendications précédentes 1 à 7, **caractérisé en ce que** le frein à friction est un frein à lamelles et le corps de frein comprend une pluralité de lamelles de frein (202), qui sont disposées au moins partiellement dans la bordure (111, 111a) dans le rotor (108).

12. Système d'entraînement selon la revendication 11, **caractérisé en ce que** la pluralité des lamelles de frein présentent au moins une lamelle de frein côté sortie et au moins une lamelle de frein côté stator, **caractérisé en ce que** la au moins une lamelle de frein côté sortie est disposée sur une denture d'entraînement (120, 121) réalisée dans la bordure (111, 111a) du rotor (108) et la au moins une lamelle de frein côté stator est disposée sur une denture d'entraînement (204a) réalisée sur la tige.

13. Système d'entraînement selon l'une quelconque des revendications 4 à 12, **caractérisé en ce que** la tige porte une douille (205) fixée axialement, sur laquelle le corps de frein s'appuie côté stator.

14. Système d'entraînement selon l'une quelconque des revendications 4 à 12, **caractérisé en ce que** le corps de frein s'appuie côté stator directement sur la tige (204).

15. Système d'entraînement selon l'une quelconque des revendications 1, 4 à 7, 13 et 14, **caractérisé en ce que** le frein à friction présente un corps de frein (270) réalisé d'un seul tenant avec le rotor avec une surface de frottement (272), qui peut être mise en liaison par adhérence avec une surface de frottement (204c) appropriée côté stator, de sorte qu'une rotation relative entre le rotor et le stator est limitée ou empêchée.
